# EUROPEAN PATENT SPECIFICATION

(11) **EP 0 418 279 B1**
(45) Date of publication and mention of the grant of the patent: **29.04.1998**
(21) Application number: 89906229.3
(22) Date of filing: 16.05.1989
(51) Int. Cl.: B29C 45/16, B29C 45/36

(54) **REDUCTION OF REQUIRED MOLD-CAVITY CLAMPING FORCE AND CONTROL OF INJECTION-MOLDED PRODUCT WALL-THICKNESS**
VERMINDERUNG DER ERFORDERLICHEN FORMSCHLIESSKRAFT UND STEUERUNG DER WANDDICKE EINES SPRITZGIESSTEILES
REDUCTION DE LA FORCE DE SERRAGE REQUISE DE LA CAVITE D'UN MOULE ET REGULATION DE L'EPAISSEUR DES PAROIS D'UN PRODUIT MOULE PAR INJECTION

(30) Priority: 02.06.1988 US 201690; 04.05.1989 US 347472
(43) Date of publication of application: 27.03.1991
(73) Proprietor: SORENSEN, Jens Ole, Rancho Santa Fe, CA 92067 (US)
(72) Inventor: SORENSEN, Jens Ole, Rancho Santa Fe, CA 92067 (US)
(74) Representative: Wilson, Nicholas Martin
(86) International application number: US8902125
(87) International publication number: WO8911959

(56) References cited:
- WO-A-88/05376
- AU-A- 0 017 577
- DE-A- 1 816 466
- GB-A- 1 397 535
- US-A- 3 305 892
- US-A- 3 466 700
- US-A- 3 482 284
- US-A- 3 737 272
- US-A- 4 184 835
- US-A- 4 339 408
- US-A- 4 470 786
- US-A- 4 508 676
- US-A- 4 733 801

## Description

The present invention generally pertains to injection molding of plastic products and is particularly directed to improvement in systems and methods for reducing the required mold-cavity clamping force and in methods of controlling the wall thickness of a plastic product while injection molding the product in a mold cavity of a mold comprising a core section and a cavity section, separated by a parting line and defining the mold cavity.

Prior art methods for controlling the wall thickness of injection molded plastic products are described in U.S. Patent No. 4,508,676 to Sorensen, U.S. Patent No. 3,737,272 to Segmuller, U.S. Patent No. 3,305,892 to Heider, U.S. Patent No. 4,128,381 to Bonis, Australian Patent Specification No. 17,577/70 (Ryles), and French Patent No. 962,726 to Mazzoni. Further prior art methods are disclosed in DE-A-1816466 and DE-A-1166457.

DE-A-1816466 describes injection molding of a rubber hot water bottle by a method in which a mold cavity is formed by longitudinally protracting a protractable contact element of a core section to contact an associated contact surface of a cavity section, wherein at least portions of the contacting associated contact surfaces are non-perpendicular to the longitudinal axis of the cavity section and stabilize the core section with respect to the side surfaces, but not the edge surfaces, while a first material is being injected into the mold cavity.

DE-A-1166457 describes a method of controlling the wall thickness of a plastic product while injection molding the product in a mold cavity of a mold comprising a core section and a cavity section, separated by a parting line and defining the mold cavity therebetween, the method comprising the steps of
(a) forming a mold cavity having a longitudinal axis by combining the core section with the cavity section, wherein at least one section includes a longitudinally protractable and retractable contact element movable between a protracted forward position and a retracted rear position, with the end of the contact element that faces the mold cavity including a contact surface at least part of which is non-perpendicular to the longitudinal axis of the cavity section;
(b) protracting the contact element to a forward position so that the contact surface of the contact element contacts an associated contact surface of the other mold section, at least part of said associated contact surface being non-perpendicular to the longitudinal axis of the cavity section whereby the non-perpendicular contact surface of the contact element contacts and is locked by the associated non-perpendicular contact, surface of the other mold section to impede lateral movement of the core section in relation to the cavity section while the contact element is protracted;
(c) injecting a first quantity of plastic material to cause said first quantity of plastic material to flow into the mold cavity while the contact element is in the forward position to form at least one first-plastic-material wall section of the product having a controlled thickness as a result of the lateral movement of the core section in relation to the cavity section being impeded by said non-perpendicular contact surfaces being locked; and,
(d) injecting a second quantity of plastic material into the mold cavity while the contact element is in the rear position.

US-A-4,508,676 describes a method for controlling the dimensions of a hollow plastics product injection molded within the cooling cavity of a mold having a core section and a cavity section defining the cooling cavity therebetween and separated by a parting line comprising stabilizing the core section in the cooling cavity and being characterized in the steps of:
(a) injecting a first plastics material into the cooling cavity so that only a part of the cooling cavity is filled and so that the injected first plastics material does not completely cover the parting line;
(b) cooling the injected first plastics material in the cooling cavity; and,
(c) injecting subsequent to injecting the first plastics material a second plastics material into the cooling cavity so that the cooled injected first plastics material in said part of the cooling cavity stabilizes the core section by impeding movement of the core section caused by injecting the second plastics material and whereby the injected second plastics material fills the cooling cavity to thereby completely cover the parting line and fuses with the cooled previously injected plastics material.
   The present invention provides a method that is characterized over the method described in DE-A-1166457 by the further steps of:
(e) cooling the injected first quantity of plastic material in the mold cavity while discontinuing the flow of plastic material into the mold cavity for a predetermined period;
(f) solidifying the first-plastic-material wall section while the flow of plastics material is discontinued to maintain said controlled thickness to impede lateral movement of the core section in relation to the cavity section; and
(g) retracting the contact element to the rear position where the contact surface of the contact element ceases to contact the associated contact surface of the other mold section;
   and wherein step (d) comprises the step of
(h) injecting the second quantity of plastic material into the mold cavity after the injected first quantity of plastic material has at least partly solidified wherein lateral movement of the core section in relation to the cavity section that might be caused by injection of the second quantity of plastic material is impeded by the at least-partly-solidified first-plastic-material wall section having a controlled thickness.

The present invention also provides a system for controlling the wall thickness of a plastic product while injection molding the product in a mold cavity of a mold comprising a core section and a cavity section, separated by a parting line and defining the mold cavity therebetween,
the system comprising
(a) the mold cavity having a longitudinal axis formed by combining the core section with the cavity section, wherein at least one section includes a longitudinally protractable and retractable contact element movable between a protracted forward position and a retracted rear position, with the end of the contact element that faces the mold cavity including a contact surface at least part of which is non-perpendicular to the longitudinal axis of the cavity section;
(b) means for protracting the contact element to the forward position so that the contact surface of the contact element contacts an associated contact surface of the other mold section; at least part of said associated contact surface being non-perpendicular to the longitudinal axis of the cavity section where the non-perpendicular contact surface of the contact element contacts and is locked by the associated non-perpendicular contact surface of the other mold section to impede lateral movement of the core section in relation to the cavity section while the contact element is protracted;
(c) means for injecting a first quantity of plastic material to cause said first quantity of plastic material to flow into the mold cavity while the contact element is in the forward position to form at least one first-plastic material wall section of the product having a controlled thickness as a result of the lateral movement of the core section in relation to the cavity section being impeded by said non-perpendicular contact surfaces being locked;
(d) means for injecting a second quantity of plastic material into the mold cavity while the contact element is in the rear position;
   characterized further by:
(e) means for discontinuing the flow of plastics material; and
(f) means for retracting the contact element to the rear position where the contact surface of the contact element ceases to contact the associated contact surface of the other mold section;
   whereby the first-plastic-material wall section may be cooled while the flow of plastics material is discontinued so that the injected first quantity of plastic material may be at least partly solidified to maintain said controlled thickness to impede lateral movement of the core section in relation to the cavity section that might be caused by injection of the second quantity of plastic material.

Additional features of the present invention are described in relation to the description of the preferred embodiments.

### BRIEF DESCRIPTION OF THE DRAWING

Figure 1 is a sectional view of one system for performing certain preferred embodiments of the method of the present invention, with the contact element in a protracted position.

Figure 2 is a sectional view of the system of Figure 1, with the contact element in a retracted position.

Figure 3 is a sectional view of the system of Figures 1 and 2 taken along line 3-3 in Figure 1.

Figure 4 is a sectional view of the system of Figures 1 and 2 taken along line 4-4 in Figure 2.

Figure 5 is view of the mold cavity in the system of Figures 1-4 with the injected first quantity of plastic material not covering the parting line of the mold.

Figure 6 is view of the mold cavity in the system of Figures 1-4 with the injected first quantity of plastic material covering the parting line of the mold.

Figure 7 is a sectional view of an alternative system for performing certain preferred embodiments of the method of the present invention, with the contact element in a protracted position.

Figure 8 is a sectional view of the system of Figure 7, with the contact element in a retracted position.

Figures 9A through 9D illustrate a series of steps in the performance of a method for producing laminated products.

### DESCRIPTION OF THE PREFERRED EMBODIMENT

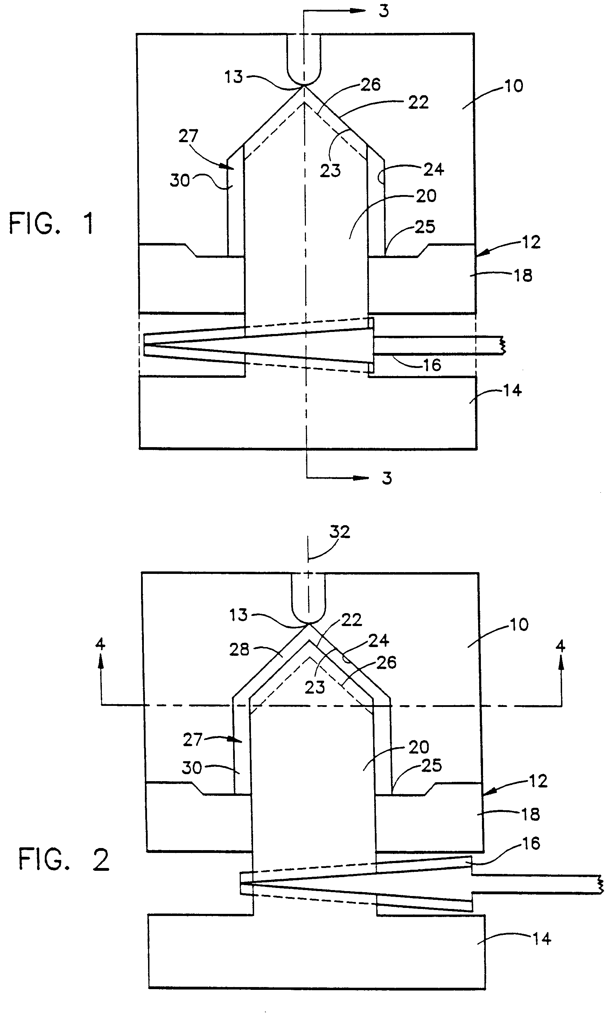

Referring to Figures 1-6, a system for performing certain preferred embodiments of the method of the present invention includes a cavity section 10, a core section 12, a gate 13, a stationary base member 14, a slidable wedge-shaped member 17 and spacing bars 17. The core section 12 includes a mating element 18 and a protractable and retractable ram-shaped contact element 20. The end of the contact element 20 that faces the cavity section 10 has a contact surface 22. The cavity section 10 has an associated contact surface 23, which coincides with the contact surface 22 of the contact element 20.

The cavity section 10 and the core section 12 are combined to define a mold cavity 24. When combined, the cavity section 10 and the core section 12 have a parting line 25 therebetween.

The mating element 18 and the stationary base member 14 are maintained in a fixed position in relation to each other by the spacing bars 17.

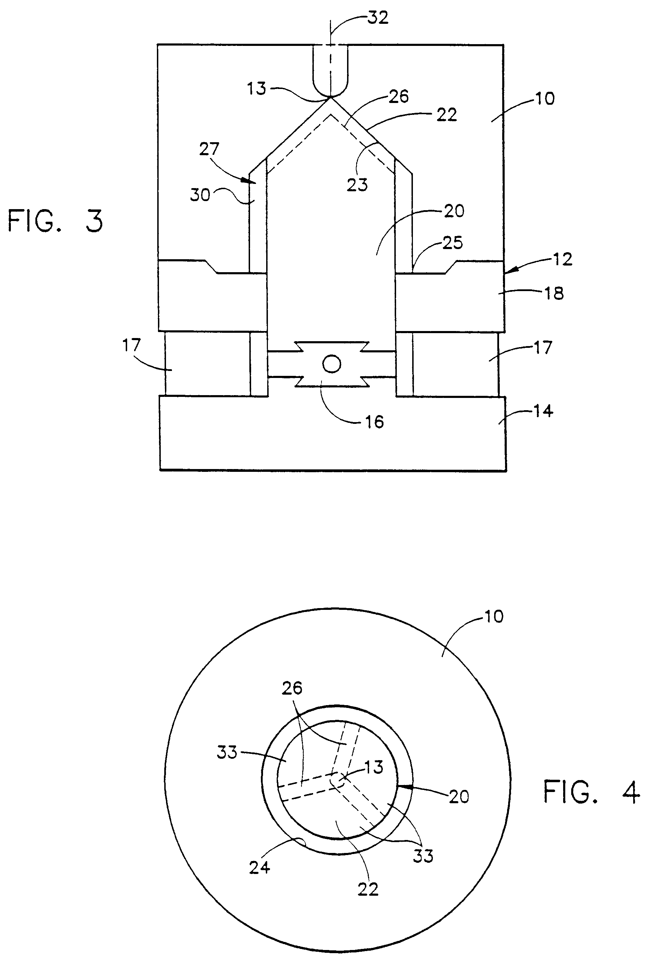

The wedge-shaped member 16 has a dove-tail-shaped lateral cross section, as shown in Figure 3; and the contact element 20 and the stationary base member 14 have corresponding dove-tail-shaped slots for receiving the wedge-shaped member 16 so that the wedge-shaped member 16 is slidably and retentatively coupled to both the contact element 20 and the stationary base member 14. Accordingly, protraction of the wedge-shaped member 16 causes the contact element 20 to be protracted to a forward position; and retraction of the wedge-shaped member 16 causes the contact element 20 to be retracted to a rear position.

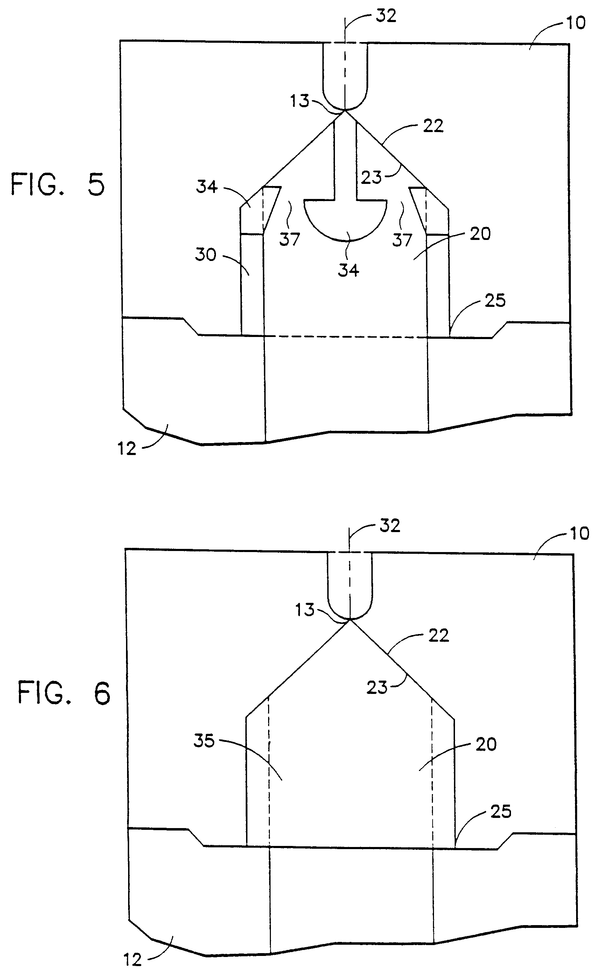

At least part of the contact surface 22 of the contact element 20 is non-perpendicular to the longitudinal axis 32 of the cavity section 10. At least part of the associated contact surface 23 of the cavity section 10 also is non-perpendicular to the longitudinal axis 32 of the cavity section 10. Referring to Figure 4, the contact surface 22 of the contact element 20 has a generally conical shape and includes a plurality of flow channels 26, which extend radially from the apex of the cone. Each contact surface may include several disconnected portions, such as the separate portions 33 shown in Figure 4.

The contact element 20 forms the entire mold-cavity-defining portion of the core section 12.

Referring to Figures 1-4, the mold cavity 24 defines a hollow, plastic product 27, having a generally conical end wall 28 and a cylindrical or approximately cylindrical side-wall 30. The longitudinal axis 32 of cavity section 10 is also the axis of the cylindrical or approximately cylindrical side-wall defining portion of the mold cavity 24, and is the same as the mold opening direction.

The system illustrated in Figures 1-4 is used to perform certain preferred embodiments of the methods of the present invention in the following manner.

Referring to Figure 2, the mold cavity 24 is formed by combining the core section 12 with the cavity section 10. The core section 12 forms the inside surface of the product 27 defined by the mold cavity 24 and the cavity section 10 forms the outside surface of the product.

The slidable wedge-shaped member 16 is protracted between the contact element 20 and the stationary base member 14 to forcefully protract the contact element 20 along the longitudinal axis of the cavity section 10 to a forward position so that the non-perpendicular portion of the contact surface 22 of the contact element 20 contacts the coincident non-perpendicular portion of the associated contact surface 23 of the cavity section 10. Such contact is effected between the fringe region of the contact element contact surface 22 and the the fringe region of the associated contact surface 23. The fringe region of the contact surface 22, 23 is the portion thereof that borders the side-wall-defining portion of the respective contact element 22 or cavity section 10.

In an alternative preferred embodiment (not shown) the cavity section includes a protractable and retractable contact element.

Whether the contact element is included in the core section as shown in Figures 1 and 2 or the cavity section (not shown) it may or may not be protractable along a longitudinal axis of the cavity section, as shown in Figures 1 and 2.

Protracting the contact element 20 to a forward position causes the non-perpendicular portion of the contact surface 22 to contact and be locked by the non-perpendicular portion of the associated contact surface 23 of the cavity section 10 to thereby impede lateral movement of the core section 10 in relation to the longitudinal axis 32 of the cavity section 10.

A first quantity of plastic material is injected through the gate 13 and caused to flow into the mold cavity 24 and through the flow channels 26 in the contact surface 22 of the contact element 20 while the contact element is held in the forward position by the wedge-shaped member 16 to form at least one first-plastic-material section 34, 35 of the product 27. In one embodiment the injected first quantity of plastic material 34 does not completely cover the parting line 25, as shown in Figure 5. In an alternative embodiment, the injected first quantity of plastic material 35 completely covers the parting line 25, as shown in Figure 6.

The wall thickness of the mold cavity 24 is controlled during injection of the first quantity of plastic material because lateral movement of the core section 12 in relation to the cavity section 10 is impeded by the non-perpendicular portion of the contact surface 22 of the contact element 20 contacting and locking the coincident non-perpendicular portion of the associated contact surface 23 of the cavity section 10, as described above. Effecting such locking contact between the fringe regions of the contact element contact surface 22 and the fringe region of the associated contact surface 23 spreads such contact over a more far-reaching area and thereby better impedes any such lateral movement.

In one preferred embodiment, the injected first quantity of plastic material 34, 35 cools in the mold cavity 24 while flow of plastic material is discontinued for a predetermined period.

The slidable wedge-shaped member 16 is then retracted to cause the contact element 20 to be retracted to a rear position, as shown in Figure 2, where the contact surface 22 ceases to contact the cavity section 10; while the injected first quantity of plastic material 34, 35 at least partly solidifies.

The at-least-partly-solidified plastic material wall section(s) 34, 35 have a controlled wall thickness as a result of the lateral movement of the core section 12 being impeded by the locking contact of the non-perpendicular wall surfaces 22, 23 during the injection of the first quantity of plastic material 34, 35.

A second quantity of plastic material is injected into the mold cavity 24 while the contact element 20 is held in the rear position by the wedge-shaped member 16 to form the remainder of the plastic product 27. In the embodiment of Figure 5, the injected second quantity of plastic material flows to the parting line 25 to complete the formation of the side wall 30 of the plastic product 27 and also forms the end-wall 28 of the plastic product 27. In this embodiment, the at-least-partly-solidified plastic material wall section(s) 34 define flow channels 37 for directing the injected second quantity of plastic material into the remainder of the mold cavity 24. In the embodiment of Figure 6, the injected second quantity of plastic material forms the end-wall 28 of the plastic product 27.

The at-least-partly-solidified plastic material wall section(s) 34, 35 impede any lateral movement of the core section 12 in relation to the longitudinal axis 32 of the cavity section 10 while the second quantity of plastic material is being injected, and thus control the wall thickness of the mold cavity 24 during the injection of the second quantity of plastic material into the mold cavity 24.

Because lateral movement of the core section 12 is thus impeded during injection of the second quantity of plastic material, the second quantity of plastic material may be injected at the same or a higher pressure than the pressure at which the first quantity of plastic material was injected. In the embodiment of Figure 5, in which the injected first quantity of plastic material does not completely cover the parting line 25, the second quantity of plastic material typically is injected at a higher pressure. In the embodiment of Figure 6, in which the injected first quantity of plastic material completely covers the parting line 25, the second quantity of plastic material is injected at a higher pressure, at the same pressure or at a lower pressure in relation to the pressure at which the first plastic material was injected. Injecting the the second quantity of plastic material at a higher pressure enhances bonding between the first and second quantities of plastic material. The second quantity of plastic material may be injected into the mold cavity 24 at a lower pressure than the first quantity of plastic material in order to further reduce the required clamping force.

This completes formation of the plastic product 27 having a controlled wall thickness in accordance with the above-described embodiments of the present invention. After the product 27 is solidified, the mold is opened and the product 27 is ejected. The above-described cycle is then repeated.

In an alternative preferred embodiment, the steps of the method are the same as described above, except that flow of the plastic material in the mold cavity is not interrupted between the injection of the first quantity of plastic material and the injection of the second quantity of plastic material. In this alternative embodiment, however, the first quantity of plastic material does not flow to completely cover the parting line. Such limited flow of the first quantity of plastic material is shown in Figure 5, wherein the first quantity of plastic material at least partly solidifies to form the wall sections 34.

Protracting the contact element 20 to a forward position to causes the non-perpendicular portion of the contact surface 22 to contact the associated contact surface 23 of the cavity section 10 also reduces the area of the mold cavity 24 as projected on a plane perpendicular to the mold opening direction and thus reduces the clamping force required during the injection of plastic material into the mold cavity 24. When the contact element 20 is protracted to the forward position, as shown in Figures 1 and 3, the contact surface 22 covers approximately the complete end-wall-defining portion of the cavity section 10 to thereby reduce the mold cavity area as projected on a plane perpendicular to the mold opening direction to approximately the cross-sectional area of the side-wall-defining portion of the mold cavity, which is relatively small because the product 27 has a cylindrical or approximately cylindrical side wall 30.

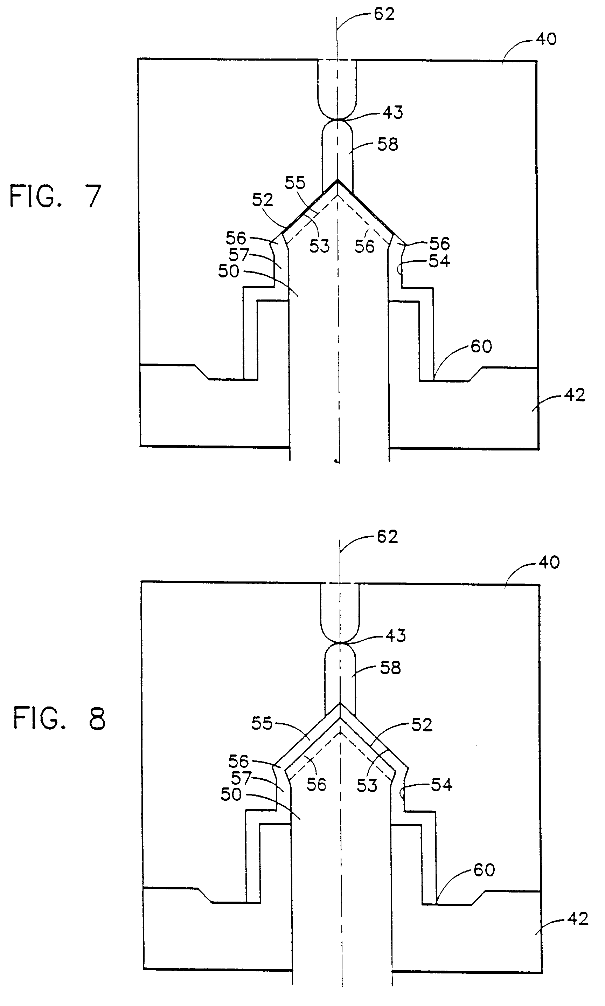

Additional preferred embodiments of the method of the invention are practised by using the system of Figures 7 and 8. The system of Figures 7 and 8 includes a cavity section 40, a core section 42, and a gate 43. The core section 42 includes a protractable and retractable ram-shaped contact element 50. The end of the contact element 50 that faces the cavity section 40 has a contact surface 52. The cavity section 40 has an associated contact surface 53, which coincides with the contact surface 52 of the contact element 50.

The cavity section 40 and the core section 42 are combined to define a mold cavity 54. When combined, the cavity section 40 and the core section 42 have a parting line 60 therebetween.

At least part of the contact surface 52 of the contact element 50 is non-perpendicular to the longitudinal axis 62 of the cavity section 40. At least part of the associated contact surface 53 of the cavity section 40 also is non-perpendicular to the longitudinal axis 62 of the cavity section 40. The contact surface 52 of the contact element 50 has a generally conical shape and includes a plurality of flow channels 56, which extend radially from the apex of the cone. Each contact surface may include several disconnected portions.

The mold cavity 54 further defines an end region 55, a side region 56 adjacent the end region 55 and a cylindrical or approximately cylindrical side-wall-defining region 57 adjacent the side region 56. The side region 56 has a negative slope. In addition, the mold cavity 54 defines a flow region 58 between the gate 43 and the end region 55.

The longitudinal axis 62 of cavity section 40 is also the axis of the cylindrical or approximately cylindrical side-wall defining portion of the mold cavity 54, and is the same as the mold opening direction.

The system illustrated in Figures 7 and 8 is used to perform certain preferred embodiments of the methods of the present invention in the following manner.

The mold cavity 54 is formed by combining the core section 42 with the cavity section 40. The core section 42 forms the inside surface of the product defined by the mold cavity 54 and the cavity section 40 forms the outside surface of the product.

The contact element 50 is protracted by means such as the wedge-shaped member 16 of the embodiment of Figures 1-6 along the longitudinal axis 62 of the cavity section 50 to a forward position so that the non-perpendicular portion of the contact surface 52 of the contact element 50 contacts the coincident non-perpendicular portion of the associated contact surface 53 of the cavity section 40. Such contact is effected between the fringe region of the contact element contact surface 52 and the the fringe region of the associated contact surface 53. The fringe region of the contact surface 52, 53 is the portion thereof that borders the side-wall-defining portion of the respective contact element 52 or cavity section 40.

Protracting the contact element 50 to a forward position causes the non-perpendicular portion of the contact surface 52 to contact and be locked by the non-perpendicular portion of the associated contact surface 53 of the cavity section 40 to thereby impede lateral movement of the core section 40 in relation to the longitudinal axis 62 of the cavity section 40.

A first quantity of plastic material is infected through the gate 43 and caused to flow into the mold cavity 54 through the flow region 58 and through the flow channels 56 in the contact surface 52 of the contact element 50 to completely cover the parting line 60 while the contact element 50 is held in the forward position to form at least one first-plastic-material section of the product.

The wall thickness of the mold cavity 54 is controlled during injection of the first quantity of plastic material because lateral movement of the core section 42 in relation to the cavity section 40 is impeded by the non-perpendicular portion of the contact surface 52 of the contact element 50 contacting and locking the coincident non-perpendicular portion of the associated contact surface 53 of the cavity section 40, as described above. Effecting such locking contact between the fringe regions of the contact element contact surface 52 and the fringe region of the associated contact surface 53 spreads such contact over a more far-reaching area and thereby better impedes any such lateral movement.

The injected first quantity of plastic material cools in the mold cavity 54 while flow of plastic material is discontinued for a predetermined period.

The contact element 20 is then retracted to a rear position, as shown in Figure 8, where the contact surface 52 ceases to contact the cavity section 40; while the injected first quantity of plastic material at least partly solidifies.

The at-least-partly-solidified plastic material wall section(s) have a controlled wall thickness as a result of the lateral movement of the core section 42 being impeded by the locking contact of the non-perpendicular wall surfaces 52, 53 during the injection of the first quantity of plastic material.

Because the side region 56 has a negative slope, the first-plastic-material wall section(s) are compressed when the contact element 50 is retracted to the rear position, and thereby seals the mold cavity 54 in the side region 56 to prevent the flow of subsequently injected plastic material beyond the side region 56.

A second quantity of plastic material is subsequently injected into the mold cavity 54 while the contact element 50 is held in the rear position. The injected second quantity of plastic material forms the end-wall of the plastic product.

The flow region 58 is of such dimension and/or temperature that some of the first quantity of plastic material residing in the flow region 58 while the first quantity of plastic material is cooling does not solidify during the predetermined period that flow of plastic material into the mold cavity 54 is interrupted, and is forced further into the mold cavity 54 by the subsequently injected second quantity of plastic material. Such a flow region may also be used in embodiments of the invention wherein the injected first quantity of plastic material does not completely cover the parting line, such as the embodiment described above with reference to Figures 1-5.

The at-least-partly-solidified plastic material wall section(s) formed by the first quantity of plastic material impede any lateral movement of the core section 42 in relation to the longitudinal axis 62 of the cavity section 40 while the second quantity of plastic material is being injected, and thus control the wall thickness of the mold cavity 54 during the injection of the second quantity of plastic material into the mold cavity 54.

Because lateral movement of the core section 42 is thus impeded during injection of the second quantity of plastic material, the second quantity of plastic material is injected at a higher pressure, at the same pressure or at a lower pressure in relation to the pressure at which the first plastic material was injected. Injecting the the second quantity of plastic material at a higher pressure enhances bonding between the first and second quantities of plastic material

This completes formation of the plastic product having a controlled wall thickness in accordance with the embodiments of the present invention described with reference to Figure 7 and 8. After the product is solidified, the mold is opened and the product is ejected. The above-described cycle is then repeated.

In practising the various embodiments of the methods of the invention described herein, there may be injections of plastic material in addition to those so described; and such additional injections may take place, before, after and/or between the respective injections of first and second plastic materials described herein, such as for example, during the production of laminated products. Also, the second quantity of plastic material may be of a different composition and/or color than the first quantity of plastic material, and may be injected into the mold cavity by a different gate (or gates) than that used to inject the first quantity of plastic material.

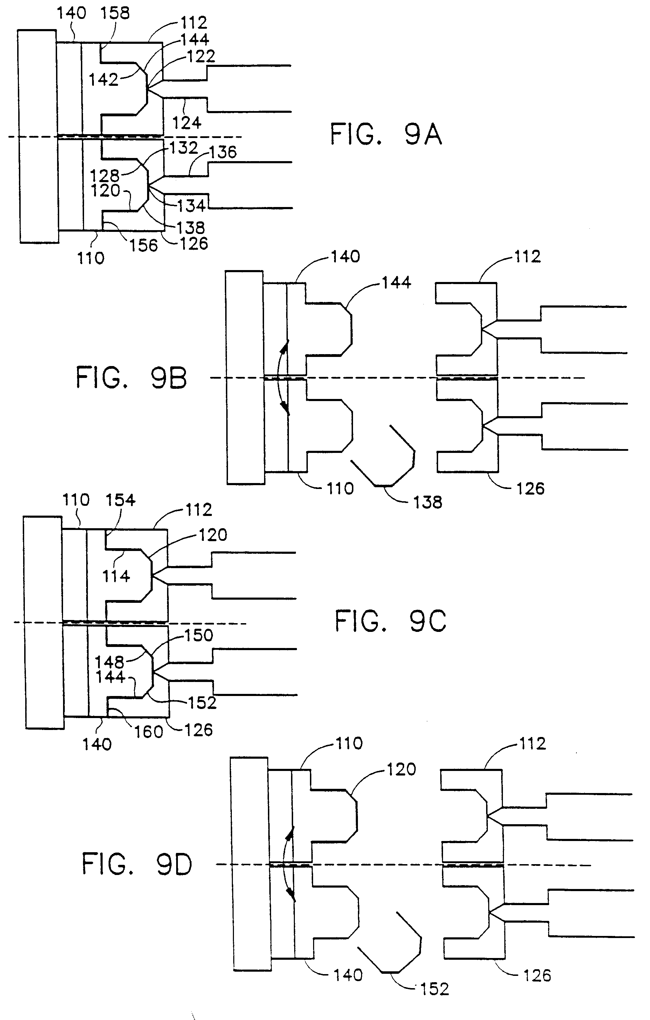

A method of cyclic injection molding hollow, plastic products having laminated walls is described with reference to Figures 9A through 9D. This method utilizes a first common mold part 140, a second common mold part 110, a first complementary mold part 112, and a second complementary mold part 126.

Figures 9a-d do not show the invention as defined in claims 1 and 17.

Referring to Figure 9A, the first common mold part 140 is combined with the first complementary mold part 112 to assemble a first mold cavity 142.

A primary plastic material 144 is injected through a runner system 124 and a gate 122 into the first mold cavity 142.

The injected primary plastic material 144 solidifies to form a first plastic wall 144.

The first common mold part 140 is then separated from the first complementary mold part 112, as shown in Figure 9B, and combined with the second complementary mold part 126, as shown in Figure 9C to assemble a second mold cavity 148 with the first plastic wall 144 attached to the first common mold part 140 so that when the second mold cavity 148 is assembled the first plastic wall 144 is contained within the second mold cavity 148.

A secondary plastic material 150 is injected through a runner system 136 and a gate 134 (see Figure 9A for identification of these components) into the second mold cavity 148, as shown in Figure 9C.

The injected secondary plastic material 150 solidifies so as to form a second plastic wall 150 that fuses with the first plastic wall 144 to produce a first hollow plastic product 152 having laminated walls.

The first common mold part 140 is then separated from the second complementary mold part 126, as shown in Figure 9D, and the plastic product 152 is ejected.

The process of injecting the primary plastic material 144 into the first mold cavity 142 includes the steps of:
(a) injecting a first portion of the primary plastic material 144 into the first mold cavity 142, such as the first portion of plastic material 34 shown in Figure 5;
(b) cooling the injected first portion of the primary plastic material 144 in the first mold cavity 142; and
(c) injecting subsequent to injecting the first portion of the primary plastic material 144 a second portion of the primary plastic material 144 into the first mold cavity 142 so that the cooled injected first portion of the primary plastic material in the first mold cavity stabilizes the dimensions of the first mold cavity 142 by impeding movement of the first common mold part 140 in relation to the first complementary mold part 112 caused by injecting the second portion of the primary plastic material, whereby the second portion of the primary plastic material 144 fuses with the cooled previously injected first portion of the primary plastic material 144.

The process of injecting the secondary plastic material 150 into the second mold cavity 148 includes the steps of:
(a) injecting a first portion of the secondary plastic material 150 into the second mold cavity 148;
(b) cooling the injected first portion of the secondary plastic material 150 in the second mold cavity 148; and
(c) injecting subsequent to injecting the first portion of the secondary plastic material 150 a second portion of the secondary plastic material 150 into the second mold cavity 148 so that the cooled injected first portion of the secondary plastic material 150 in the second mold cavity 148 stabilizes the dimensions of the second mold cavity 148 by impeding movement of the first common mold part 140 in relation to the second complementary mold part 126 caused by injecting the second portion of the secondary plastic material 150 , whereby the second portion of the secondary plastic material 150 fuses with the cooled previously injected first portion of the secondary plastic material 150.

The simultaneous production of a plurality of plastic products 138, 152 with the system of Figures 9A through 9D is further described as follows.

Referring again to Figure 9C, the second common mold part 110 is combined with the first complementary mold part 112 to assemble a third mold cavity 114.

A tertiary plastic material 120 is injected through the runner system 124 and the gate 122 into the third mold cavity 114 while the secondary plastic material 150 is being injected the runner system 136 and the gate 134 into the second mold cavity 148.

The injected tertiary plastic material 120 solidifies in the third mold cavity 114 to form a first plastic wall 120 while the injected secondary plastic material 150 is solidifying in the second mold cavity 148 to form the second plastic wall of the laminated plastic product 52.

The second common mold part 110 is then separated from the first complementary mold part 112, as shown in Figure 9D, and combined the second complementary mold part 126 to assemble a fourth mold cavity 128, as shown in Figure 9A, with the first plastic wall 120 attached to the second common mold part 110 so that when the fourth mold cavity 128 is assembled the first plastic wall 120 is contained within the fourth mold cavity 128.

A quaternary plastic material 132 is injected through the runner system 136 and the gate 134 into the fourth mold cavity 128 while the first plastic wall 120 is contained therein, and while the primary plastic material 144 is being injected into the first mold cavity 142.

While the injected primary plastic material is solidifying in the first mold cavity 142, the injected quaternary plastic material 132 solidifies in the fourth mold cavity 128 so as to form a second plastic wall 128 that fuses with the first plastic wall 120 to produce a second hollow plastic product 138 having laminated walls.

The second common mold part 110 is then separated from the first complementary mold part 126, as shown in Figure 9B, and the plastic product 138 is ejected.

The process of injecting the tertiary plastic material 120 into the third mold cavity 114 and of injecting the quaternary plastic material 132 into the fourth mold cavity 128 include the above-described steps (a), (b) and (c) of injecting the primary plastic material 144 into the first mold cavity 142 and injecting the secondary plastic material 150 into the second mold cavity 148.

This method is particularly advantageous when the primary plastic material 144 is different from the secondary material 150 and the tertiary plastic material 120 is different from the quaternary plastic material 132. For example, the method is ideally suited for molding a hollow, thin-walled plastic product in which the side wall must provide both a moisture barier and a gas (such as Oxygen) barrier. To mold such a product, a plastic material having a desirable mositure-barrier characteristic is selected as one of the injected plastic materials: and a plastic material having a desirable gas-barrier characteristic is selected as the other injected plastic material.

When the plastic products 138 are to be of the same composition as the plastic products 152, the primary plastic material 144 is the same as the tertiary plastic material 120 and the secondary plastic material 150 is the same as the quaternary plastic material 132.

Preferably at least one of the mold parts defining each mold cavity 114, 128, 142, 148 includes a protractable and retractable ram-shaped element with one end of the ram-shaped element facing the mold cavity, such as described above with reference to Figures 1-6. Accordingly, during step (a) of the injection process described above, the ram-shaped element is protracted to a forward position; and the first portion of the plastic material is injected into the mold cavity while the ram-shaped element is in the forward position; and during step (c) of the injection process described above, the ram-shaped element is retracted to a rear position; and the second portion of the plastic material is injected into the mold cavity while the ram-shaped element is in the rear position.

## Claims

1. A method of controlling the wall thickness of a plastic product while injection molding the product in a mold cavity of a mold comprising a core section and a cavity section, separated by a parting line and defining the mold cavity therebetween,
the method comprising the steps of
(a) forming a mold cavity having a longitudinal axis by combining the core section with the cavity section, wherein at least one section includes a longitudinally protractable and retractable contact element movable between a protracted forward position and a retracted rear position, with the end of the contact element that faces the mold cavity including a contact surface at least part of which is non-perpendicular to the longitudinal axis of the cavity section;
(b) protracting the contact element to a forward position so that the contact surface of the contact element contacts an associated contact surface of the other mold section, at least part of said associated contact surface being non-perpendicular to the longitudinal axis of the cavity section whereby the non-perpendicular contact surface of the contact element contacts and is locked by the associated non-perpendicular contact surface of the other mold section to impede lateral movement of the core section in relation to the cavity section while the contact element is protracted;
(c) injecting a first quantity of plastic material to cause said first quantity of plastic material to flow into the mold cavity while the contact element is in the forward position to form at least one first-plastic-material wall section of the product having a controlled thickness as a result of the lateral movement of the core section in relation to the cavity section being impeded by said non-perpendicular contact surfaces being locked;
(d) injecting a second quantity of plastic material into the mold cavity while the contact element is in the rear position;
characterised by the further steps of:
(e) cooling the injected first quantity of plastic material in the mold cavity while discontinuing the flow of plastic material into the mold cavity for a predetermined period;
(f) solidifying the first-plastic-material wall section while the flow of plastics material is discontinued to maintain said controlled thickness to impede lateral movement of the core section in relation to the cavity section; and
(g) retracting the contact element to the rear position where the contact surface of the contact element ceases to contact the associated contact surface of the other mold section;
and wherein step (d) comprises the step of
(h) injecting the second quantity of plastic material into the mold cavity after the injected first quantity of plastic material has at least partly solidified wherein lateral movement of the core section in relation to the cavity section that might be caused by injection of the second quantity of plastic material is impeded by the at-least-partly-solidified first-plastic-material wall section having a controlled thickness.

2. A method according to Claim 1, wherein step (a) comprises the step of
(i) forming the mold cavity with mold sections in which the non-perpendicular contact surface of the contact element coincides with the non-perpendicular associated contact surface of the other mold section.

3. A method according to Claim 1, wherein step (a) comprises the step of
(i) forming the mold cavity with a core section that includes said contact element.

4. A method according to Claim 3, wherein step (a) comprises the step of
(i) forming the mold cavity with a core section in which said contact element forms the entire mold-cavity-side-wall-defining portion of the core section.

5. A method according to Claim 3, wherein step (a) comprises the step of
(i) forming the mold cavity with the mold sections that define a gate, an end region adjacent the gate, and a cylindrical region adjacent the end region so that the first-plastic-material wall sections contact both the core section and the cavity section when the contact element is retracted to the rear position during step (g) to impede movement of the core section in relation to the cavity section when the second quantity of plastic material is injected during step (d).

6. A method according to Claim 3, wherein step (a) comprises the step of
(i) forming the mold cavity with the mold sections that define a gate, an end region adjacent the gate, and a cylindrical region adjacent the end region so that the first-plastic-material wall sections contact both the core section and the cavity section when the contact element is retracted to the rear position during step (g) to prevent lamination of the first-plastic-material wall section when the second quantity of plastic material is injected during step (d).

7. A method according to Claim 3, wherein step (a) comprises the step of
(i) forming the mold cavity with the mold sections that define a gate, an end region adjacent the gate, and a side region adjacent the end region, wherein the side region has a negative slope so that when the contact element is retracted to the rear position during step (g) the first-plastic-material wall sections formed during step (c) is compressed.

8. A method according to Claim 7, wherein step (c) comprises the step of
(j) injecting the first quantity of plastic material into the mold cavity while the contact element is in the forward position so that the injected first plastic material completely covers the parting line.

9. A method according to Claim 1, wherein step (d) comprises the step of
(i) injecting the first quantity of plastic material at a first injection pressure; and
wherein step (f) comprises step of
(j) injecting the second quantity of plastic material at a second injection pressure that is not less than the first injection pressure.

10. A method according to Claim 1, wherein step (a) comprises the step of
(i) forming the mold cavity with mold sections that define at least one flow channel after the contact element is retracted pursuant to step (g) for directing the injected second quantity of plastic material into predetermined regions of the mold cavity during step (d).

11. A method according to Claim 1, wherein step (a) comprises the step of
(i) forming the mold cavity with mold sections that define a flow region when the contact element is protracted to the forward position, wherein the flow region is of such dimension and/or temperature that some of the first quantity of plastic material residing in the flow region during step (e) does not solidify during the predetermined period and is forced further into the mold cavity by the second quantity of plastic material injected during step (d).

12. A method according to Claim 1, wherein step (c) comprises the step of
(i) injecting the first quantity of plastic material from a given gate; and wherein step (d) comprises the step of
(j) injecting the second quantity of plastic material from the given gate.

13. A method according to Claim 12, wherein step (c) comprises the step of
(i) injecting the first quantity of plastic material from only one given gate; and
wherein step (d) comprises the step of
(j) injecting the second quantity of plastic material from the one given gate.

14. A method according to Claim 1, further comprising the step of
(i) protracting the contact element to hold pressurize the injection plastic material.

15. A method according to Claim 1, wherein step (c) comprises the step of
(i) injecting the first quantity of plastic material into the mold cavity while the contact element is in the forward position so that the injected first plastic material completely covers the parting line.

16. A method according to claim 1, wherein step (c) comprises the step of
(i) injecting the first quantity of plastic material into the mold cavity while the contact element is in the forward position so that the injected first quantity of plastic material does not completely cover the parting line to form at least one first-plastic-material wall section of the product.

17. A system for controlling the wall thickness of a plastic product while injection molding the product in a mold cavity of a mold comprising a core section and a cavity section, separated by a parting line and defining the mold cavity therebetween,
the system comprising
(a) the mold cavity having a longitudinal axis formed by combining the core section with the cavity section, wherein at least one section includes a longitudinally protractable and retractable contact element movable between a protracted forward position and a retracted rear position, with the end of the contact element that faces the mold cavity including a contact surface at least part of which is non-perpendicular to the longitudinal axis of the cavity section;
(b) means for protracting the contact element to the forward position so that the contact surface of the contact element contacts an associated contact surface of the other mold section; at least part of said associated contact surface being non-perpendicular to the longitudinal axis of the cavity section where the non-perpendicular contact surface of the contact element contacts and is locked by the associated non-perpendicular contact surface of the other mold section to impede lateral movement of the core section in relation to the cavity section while the contact element is protracted;
(c) means for injecting a first quantity of plastic material to cause said first quantity of plastic material to flow into the mold cavity while the contact element is in the forward position to form at least one first-plastic-material wall section of the product having a controlled thickness as a result of the lateral movement of the core section in relation to the cavity section being impeded by said non-perpendicular contact surfaces being locked;
(d) means for injecting a second quantity of plastic material into the mold cavity while the contact element is in the rear position;
characterised further by:
(e) means for discontinuing the flow of plastics material; and
(f) means for retracting the contact element to the rear position where the contact surface of the contact element ceases to contact the associated contact surface of the other mold section;
whereby the first-plastic-material wall section may be cooled while the flow of plastics material is discontinued so that the injected first quantity of plastic material may be at least partly solidified to maintain said controlled thickness to impede lateral movement of the core section in relation to the cavity section that might be caused by injection of the second quantity of plastic material.

18. A system according to Claim 17 wherein the means for injecting the second quantity of plastic material includes means for injecting the second quantity of plastic material at a lower pressure than the first quantity of plastic material in order to further reduce the required clamping force.

19. A system according to claim 17 comprising
a slidable wedge-shaped member;
means for protracting the wedge-shaped member between the contact element and a stationary base member to forcefully protract the contact element to the forward position; and
means for retracting the wedge-shaped member so that the contact element may be retracted.

20. A system according to claim 19, wherein the wedge-shaped member is slidably and retentively coupled to both the contact element and the stationary base member so that retraction of the wedge-shaped member causes the contact element to be retracted.

## Patentansprüche

1. Verfahren zum Steuern der Wandstärke eines Plastikprodukts beim Spritzguß des Produkts in einen Formhohlraum einer Form mit einem Kernabschnitt und einem Hohlraumabschnitt, welche durch eine Trennlinie getrennt sind und den Formhohlraum dazwischen definieren,
wobei das Verfahren folgende Schritte aufweist:
(a) Bilden eines Formhohlraums mit einer Längsachse durch Kombinieren des Kernabschnitts mit dem Hohlraumabschnitt, wobei zumindest ein Abschnitt ein in Längsrichtung vor- und zurückziehbares Kontaktelement aufweist, welches zwischen einer vorgezogenen Vorwärtsposition und einer zurückgezogenen Rückwärtsposition beweglich ist, wobei das Ende des Kontaktelements, welches dem Formhohlraum gegenübersteht, eine Kontaktoberfläche aufweist, von der zumindest ein Teil nicht senkrecht zur Längsachse des Hohlraumabschnitts verläuft;
(b) Vorziehen des Kontaktelements auf eine Vorwärtsposition, so daß die Kontaktoberfläche des Kontaktelements eine zugehörige Kontaktoberfläche des anderen Formabschnitts kontaktiert, wobei zumindest ein Teil der zugehörigen Kontaktoberfläche nicht senkrecht zur Längsachse des Hohlraumabschnitts verläuft, wodurch die nicht senkrechte Kontaktoberfläche des Kontaktelements die zugehörige nicht senkrechte Kontaktoberfläche des anderen Formabschnitts kontaktiert und dadurch verriegelt wird, um eine seitliche Bewegung des Kernabschnitts in Bezug auf den Hohlraumabschnitt zu verhindern, während das Kontaktelement vorgezogen ist;
(c) Einspritzen einer ersten Menge von Plastikmaterial zum Bewirken, daß die erste Menge an Plastikmaterial in den Formhohlraum strömt, während das Kontaktelement in der Vorwärtsposition ist, zum Bilden von zumindest einem Wandabschnitt des Produkts aus dem ersten Plastikmaterial mit einer gesteuerten Dicke als Resultat dessen, daß die seitliche Bewegung des Kernabschnitts in Bezug auf den Hohlraumabschnitt durch die Verriegelung der nicht senkrechten Kontaktoberflächen verhindert wird;
(d) Einspritzen einer zweiten Menge an Plastikmaterial in den Formhohlraum während das Kontaktelement in der Rückwärtsposition ist;
gekennzeichnet durch die folgenden Schritte:
(e) Kühlen der eingespritzten ersten Menge des Plastikmaterials in dem Formhohlraum während Unterbrechens der Strömung des Plastikmaterials in den Formhohlraum während einer vorbestimmten Periode;
(f) Verfestigen des Wandabschnitts aus dem ersten Plastikmaterial, während die Strömung des Plastikmaterials unterbrochen ist, zum Aufrechterhalten der gesteuerten Dicke zur Verhinderung der seitlichen Bewegung des Kernabschnitts in Bezug auf den Hohlraumabschnitt; und
(g) Zurückziehen des Kontaktelements in die Rückwärtsposition, wo die Kontaktoberfläche des Kontaktelements aufhört, die zugehörige Kontaktoberfläche des anderen Formabschnitts zu kontaktieren;
und wobei der Schritt (d) folgenden Schritt aufweist:
(h) Einspritzen der zweiten Menge an Plastikmaterial in den Formhohlraum, nachdem sind die eingespritzte erste Menge an Plastikmaterial zumindest teilweise verfestigt hat, wobei die seitliche Bewegung des Kernabschnitts in Bezug auf den Hohlraumabschnitt, welche durch das Einspritzen der zweiten Menge an Plastikmaterial verursacht werden könnte, durch den zumindest teilweise verfestigten Wandabschnitt aus dem ersten Plastikmaterial mit einer gesteuerten Dicke verhindert wird.

2. Verfahren nach Anspruch 1,
dadurch gekennzeichnet,
daß der Schritt (a) folgenden Schritt aufweist:
(i) Bilden des Formhohlraums mit Formabschnitten, in denen die nicht senkrechte Kontaktoberfläche des Kontaktelements mit der nicht senkrechten zugehörigen Kontaktoberfläche des anderen Formabschnitts zusammenfällt.

3. Verfahren nach Anspruch 1,
dadurch gekennzeichnet,
daß der Schritt (a) folgenden Schritt aufweist:
(i) Bilden des Formhohlraums mit einer Kernabschnitt, der das Kontaktelement enthält.

4. Verfahren nach Anspruch 3,
dadurch gekennzeichnet,
daß der Schritt (a) folgenden Schritt aufweist:
(i) Bilden des Formhohlraums mit einem Kernabschnitt, in dem das Kontaktelement den gesamten Abschnitt zum Definieren der Seitenwand des Formhohlraums des Kernabschnitts bildet.

5. Verfahren nach Anspruch 3,
dadurch gekennzeichnet,
daß der Schritt (a) folgenden Schritt aufweist:
(i) Bilden des Formhohlraums mit den Formabschnitten, welche ein Gatter, einen Endbereich neben dem Gatter und einen zylindrischen Bereich neben dem Endbereich so definieren, daß die Wandabschnitte aus dem ersten Plastikmaterial sowohl den Kernabschnitt als auch den Hohlraumabschnitt kontaktieren, wenn das Kontaktelement in die Rückwärtsposition während des Schritts (g) zurückgezogen ist, um die Bewegung des Kernabschnitts in Bezug auf den Hohlraumabschnitt zu verhindern, wenn die zweite Menge an Plastikmaterial während des Schritts (d) eingespritzt wird.

6. Verfahren nach Anspruch 3,
dadurch gekennzeichnet,
daß der Schritt (a) folgenden Schritt aufweist:
(i) Bilden des Formhohlraums mit den Formabschnitten, welche ein Gatter, einen Endbereich neben dem Gatter und einen zylindrischen Bereich neben dem Endbereich so definieren, daß die Wandabschnitte aus dem ersten Plastikmaterial sowohl den Kernabschnitt als auch den Hohlraumabschnitt kontaktieren, wenn das Kontaktelement auf die Rückwärtsposition während des Schritts (g) zurückgezogen ist, um die Laminierung des Wandabschnitts aus dem ersten Plastikmaterial zu vermeiden, wenn die zweite Menge an Plastikmaterial während des Schritts (d) eingespritzt wird.

7. Verfahren nach Anspruch 3,
dadurch gekennzeichnet,
daß der Schritt (a) folgenden Schritt aufweist:
(i) Bilden des Formhohlraums mit den Formabschnitten, welcher ein Gatter, einen Endbereich neben dem Gatter und einen Seitenbereich neben dem Endbereich definieren, wobei der Seitenbereich eine negative Steigung aufweist, so daß, wenn das Kontaktelement auf die Rückwärtsposition während des Schritts (g) zurückgezogen ist, die Wandabschnitte aus dem ersten Plastikmaterial, die während des Schritts (c) gebildet werden, komprimiert werden.

8. Verfahren nach Anspruch 7,
dadurch gekennzeichnet,
daß der Schritt (c) folgenden Schritt aufweist:
(j) Einspritzen der ersten Menge des Plastikmaterials in den Formhohlraum, während das Kontaktelement in der Vorwärtsposition ist, so daß das eingespritzte erste Plastikmaterial vollständig die Trennlinie bedeckt.

9. Verfahren nach Anspruch 1,
dadurch gekennzeichnet,
daß der Schritt (d) folgenden Schritt aufweist:
(i) Einspritzen der ersten Menge an Plastikmaterial unter einem ersten Einspritzdruck; und
daß der Schritt (f) folgenden Schritt aufweist:
(j) Einspritzen der zweiten Menge an Plastikmaterial unter einem zweiten Einspritzdruck, der nicht geringer als der erste Einspritzdruck ist.

10. Verfahren nach Anspruch 1,
dadurch gekennzeichnet,
daß der Schritt (a) folgenden Schritt aufweist:
(i) Ausbilden des Formhohlraums mit Formabschnitten, welche zumindest einen Strömungskanal definieren, nachdem das Kontaktelement folgend dem Schritt (g) zurückgezogen ist, zum Richten der eingespritzten zweiten Menge an Plastikmaterial in vorbestimmte Bereiche des Formhohlraums während des Schritts (d).

11. Verfahren nach Anspruch 1,
dadurch gekennzeichnet,
daß der Schritt (a) folgenden Schritt aufweist:
(i) Bilden des Formhohlraums mit Formabschnitten, welche einen Strömungsbereich definieren, wenn das Kontaktelement in die Vorwärtsposition vorgezogen ist, wobei der Strömungsbereich eine derartige Dimension und/oder Temperatur aufweist, daß ein Teil der ersten Menge an Plastikmaterial, der in dem Strömungsbereich während des Schritts (e) ruht, sich nicht während der vorbestimmten Periode verfestigt und weiter in den Formhohlraum durch die zweite Menge an Plastikmaterial gezwängt wird, welche während des Schritts (d) eingespritzt wird.

12. Verfahren nach Anspruch 1,
dadurch gekennzeichnet,
daß der Schritt (c) den folgenden Schritt aufweist:
(i) Einspritzen der ersten Menge an Plastikmaterial von einem vorgegebenen Gatter;
und daß der Schritt (d) folgenden Schritt aufweist:
(j) Einspritzen der zweiten Menge an Plastikmaterial von dem vorgegebenen Gatter.

13. Verfahren nach Anspruch 12, wobei der Schritt (c) folgenden Schritt aufweist:
(i) Einspritzen der ersten Menge an Plastikmaterial von einem vorgegebenen Gatter;
wobei der Schritt (d) folgenden Schritt aufweist:
(j) Einspritzen der zweiten Menge an Plastikmaterial von dem einen vorgegebenen Gatter.

14. Verfahren nach Anspruch 1, gekennzeichnet durch folgenden Schritt:
(i) Vorziehen des Kontaktelements zum Halten des Einspritzplastikmaterials unter Druck.

15. Verfahren nach Anspruch 1,
dadurch gekennzeichnet,
daß der Schritt (c) folgenden Schritt aufweist:
(i) Einspritzen der ersten Menge an Plastikmaterial in den Formhohlraum, während das Kontaktelement in der Vorwärtsposition ist, so daß das eingespritzte erste Plastikmaterial die Trennlinie vollständig bedeckt.

16. Verfahren nach Anspruch 1, wobei der Schritt (c) folgenden Schritt aufweist:
(i) Einspritzen der ersten Menge an Plastikmaterial in den Formhohlraum, während das Kontaktelement in der Vorwärtsposition ist, so daß die eingespritzte erste Menge an Plastikmaterial die Trennlinie nicht vollständig bedeckt, um zumindest einen Wandabschnitt aus einem ersten Plastikmaterial des Produkts zu bilden.

17. System zum Steuern der Wanddicke eines Plastikprodukts beim Spritzgießen des Produkts in einem Formhohlraum einer Form mit einem Kernabschnitt und einem Hohlraumabschnitt, die durch eine Trennlinie getrennt sind und dazwischen den Formhohlraum definieren,
wobei das System aufweist:
(a) den Formhohlraum mit einer Längsachse, die durch Kombinieren des Kernabschnitts mit dem Hohlraumabschnitt gebildet ist, wobei zumindest ein Abschnitt ein in Längsrichtung vor- und zurückziehbares Kontaktelement aufweist, das zwischen einer vorgezogenen Vorwärtsposition und einer zurückgezogenen Rückwärtsposition beweglich ist, wobei das Ende Kontaktelements, welches dem vom Hohlraum gegenüberliegt, eine Kontaktoberfläche aufweist, von der zumindest ein Teil nicht senkrecht zur Längsachse des Hohlraumabschnitts verläuft;
(b) eine Einrichtung zum Vorziehen des Kontaktelements in die Vorwärtsposition, so daß die Kontaktoberfläche des Kontaktelements eine zugehörige Kontaktoberfläche des anderen Formabschnitts kontaktiert; wobei zumindest ein Teil der zugehörigen Kontaktoberfläche nicht senkrecht zur Längsachse des Hohlraumabschnitts ist, wodurch die senkrechte Kontaktoberfläche des Kontaktelements die zugehörige nicht senkrechte Kontaktoberfläche des anderen Formabschnitts kontaktiert und dadurch verriegelt ist, um eine seitliche Bewegung des Kernabschnitts in Bezug auf den Hohlraumabschnitt zu verhindern, während das Kontaktelement vorgezogen ist;
(c) eine Einrichtung zum Einspritzen einer ersten Menge an Plastikmaterial zum Bewirken, daß die erste Menge an Plastikmaterial in den Formhohlraum fließt, während das Kontaktelement in der Vorwärtsposition ist, um zumindest einen Wandabschnitt des Produkts aus dem ersten Plastikmaterial mit einer gesteuerten Dicke als Resultat dessen zu bilden, daß die seitliche Bewegung des Kernabschnitts in Bezug auf den Hohlraumabschnitt durch die Verriegelung der nicht senkrechten Kontaktoberflächen verhindert ist;
(d) eine Einrichtung zum Einspritzen einer zweiten Menge an Plastikmaterial in den Formhohlraum während das Kontaktelement in der Rückwärtsposition ist;
gekennzeichnet durch:
(e) eine Einrichtung zum Unterbrechen der Strömung des Plastikmaterials; und
(f) eine Einrichtung zum Zurückziehen des Kontaktelements in die Rückwärtsposition, wo die Kontaktoberfläche des Kontaktelements aufhört, die zugehörige Kontaktoberflache des anderen Formabschnitts zu kontaktieren;
wodurch der Wandabschnitt aus dem ersten Plastikmaterial kühlbar ist, während die Strömung des Plastikmaterials unterbrochen ist, so daß sich die eingespritzte erste Menge an Plastikmaterial zumindest teilweise verfestigen kann, um die gesteuerte Dicke zur Verhinderung der seitlichen Bewegung des Kernabschnitts in Bezug auf den Hohlraumabschnitt, welche durch das Einspritzen der zweiten Menge an Plastikmaterial verursacht werden könnte, aufrecht zu erhalten.

18. System nach Anspruch 17,
dadurch gekennzeichnet,
daß die Einrichtung zum Einspritzen der zweiten Menge an Plastikmaterial eine Einrichtung zum Einspritzen der zweiten Menge an Plastikmaterial unter einem niedrigeren Druck als die erste Menge an Plastikmaterial zum weiteren Reduzieren der erforderlichen Klemmkraft aufweist.

19. System nach Anspruch 17, gekennzeichnet durch:
ein verschiebbares keilförmiges Element;
eine Einrichtung zum Vorziehen des keilförmigen Elements zwischen dem Kontaktelement und einem stationären Basiselement zum zwangsweisen Vorziehen des Kontaktelements in die Vorwärtsposition; und
eine Einrichtung zum Zurückziehen des keilförmigen Elements derart, daß das Kontaktelement zurückziehbar ist.

20. System nach Anspruch 19, wobei das keilförmige Element verschiebbar ist und festhaltend sowohl mit dem Kontaktelement als auch mit dem stationären Basiselement verbunden ist, so daß das Zurückziehen des keilförmigen Elements bewirkt, daß das Kontaktelement zurückgezogen wird.

## Revendications

1. Procédé pour contrôler l'épaisseur de paroi d'un produit en matière plastique pendant le moulage par injection du produit dans une cavité de moule d'un moule comprenant une partie de noyau et une partie de cavité, séparées par une ligne de séparation, et définissant la cavité de moule entre elles,
le procédé comprenant les étapes suivantes :
(a) former une cavité de moule ayant un axe longitudinal en combinant la partie de noyau à la partie de cavité, alors gu'une de ces parties au moins comprend un élément de contact sortant et rentrant, mobile entre une position avant sortie et une position arrière rentrée, l'extrémité de l'élément de contact qui fait face à la cavité de moule comprenant une surface de contact dont une partie au moins n'est pas perpendiculaire à l'axe longitudinal de la partie de cavité ;
(b) sortir l'élément de contact jusqu'à une position avant afin que la surface de contact de l'élément de contact vienne en contact avec une surface de contact associée de l'autre partie de moule, une partie au moins de ladite surface de contact associée n'étant pas perpendiculaire à l'axe longitudinal de la partie de cavité, grâce à quoi la surface de contact non perpendiculaire de l'élément de contact vient en contact avec, et se trouve verrouillée par la surface de contact non perpendiculaire associée de l'autre partie de moule pour empêcher un mouvement latéral de la partie de noyau par rapport à la partie de cavité pendant que l'élément de contact est sorti ;
(c) injecter une première quantité de matière plastique pour faire couler ladite première quantité de matière plastique à l'intérieur de la cavité de moule pendant que l'élément de contact est dans la position avant pour former avec la première matière plastique injectée une partie de paroi du produit ayant une épaisseur contrôlée du fait que le mouvement latéral de la partie de noyau par rapport à la partie de cavité est empêché puisque lesdites surfaces de contact non perpendiculaires sont verrouillées ;
(d) injecter une seconde quantité de matière plastique à l'intérieur de la cavité de moule tandis que l'élément de contact est dans la position arrière ;
caractérisé par les autres étapes suivantes :
(e) refroidir la première quantité de matière plastique injectée dans la cavité de moule tout en interrompant la coulée de matière plastique vers l'intérieur de la cavité de moule pendant une période prédéterminée ;
(f) laisser la première partie de paroi en matière plastique se solidifier, tandis que la coulée de matière plastique est interrompue pour maintenir ladite épaisseur contrôlée, et empêcher un mouvement latéral de la partie de noyau par rapport à la partie de cavité ; et
(g) rentrer l'élément de contact jusqu'à la position arrière, grâce à quoi la surface de contact de l'élément de contact cesse d'être en contact avec la surface de contact associée de l'autre partie de moule ;
et dans lequel l'étape (d) comprend l'étape suivante:
(h) injecter la seconde quantité de matière plastique à l'intérieur de la cavité de moule lorsque la première quantité de matière plastique injectée est au moins partiellement solidifiée, dans lequel un mouvement latéral de la partie de noyau par rapport à la partie de cavité qui pourrait résulter de l'injection de la seconde quantité de matière plastique est empêché par la première partie de cloison en matière plastique au moins partiellement solidifiée ayant une épaisseur contrôlée.

2. Procédé selon la revendication 1, dans lequel l'étape (a) comprend l'étape suivante :
(i) former la cavité de moule avec des parties de moule dans lesquelles la surface de contact non perpendiculaire de l'élément de contact coïncide avec la surface de contact associée non perpendiculaire de l'autre partie de moule.

3. Procédé selon la revendication 1, dans lequel l'étape (a) comprend l'étape suivante :
(i) former la cavité de moule avec une partie de noyau qui comprend ledit élément de contact.

4. Procédé selon la revendication 3, dans lequel l'étape (a) comprend l'étape suivante :
(i) former la cavité de moule avec une partie de noyau dans laquelle ledit élément de contact forme la totalité de la partie définissant la paroi latérale de la cavité de moule de la partie de noyau.

5. Procédé selon la revendication 3, dans lequel l'étape (a) comprend l'étape suivante :
(i) former la cavité de moule avec les parties de moule qui définissent une ouverture, une région d'extrémité adjacente à l'ouverture et une région cylindrique adjacente à la région d'extrémité de manière que les parties de paroi formées par la première matière plastique viennent en contact à la fois avec la partie de noyau et avec la partie de cavité quand l'élément de contact est rentré dans la position arrière pendant l'étape (g) pour empêcher un mouvement de la partie de noyau par rapport à la partie de cavité quand la seconde quantité de matière plastique est injectée au cours de l'étape (d).

6. Procédé selon la revendication 3, dans lequel l'étape (a) comprend l'étape suivante :
(i ) former la cavité de moule avec les parties de moule qui définissent : une ouverture, une région d'extrémité adjacente à l'ouverture et une région cylindrique adjacente à la région d'extrémité de manière que les parties de paroi formées par la première matière plastique viennent en contact à la fois avec la partie de noyau et avec la partie de cavité quand l'élément de contact est rentré dans la position arrière pendant l'étape (g) pour empêcher la stratification de la partie de paroi formée par la première matière plastique lorsque la seconde quantité de matière plastique est injectée au cours de l'étape (d).

7. Procédé selon la revendication 3, dans lequel l'étape (a) comprend l'étape suivante :
(i) former la cavité de moule avec les parties de moule qui définissent : une ouverture, une région d'extrémité adjacente à l'ouverture et une région latérale adjacente à la région d'extrémité, dans lequel la région latérale a une pente négative de manière qu'au moment où l'élément de contact est rentré dans la position arrière pendant l'étape (g), la partie de paroi formée par la première matière plastique pendant l'étape (c) soit comprimée.

8. Procédé selon la revendication 7, dans lequel l'étape (c) comprend l'étape suivante :
(j) injecter la première quantité de matière plastique à l'intérieur de la cavité de moule pendant que l'élément de contact est dans la position avant, de manière que la première matière plastique injectée couvre complètement la ligne de séparation.

9. Procédé selon la revendication 1, dans lequel l'étape (d) comprend l'étape suivante :
(i) injecter la première quantité de matière plastique sous une première pression d'injection ; et
dans lequel l'étape (f) comprend l'étape suivante :
(j) injecter la seconde quantité de matière plastique sous une seconde pression d'injection qui n'est pas inférieure à la première pression d'injection.

10. Procédé selon la revendication 1, dans lequel l'étape (a) comprend l'étape suivante :
(i) former la cavité de moule avec des parties de moule qui définissent au moins une région de coulée après le retrait de l'élément de contact qui suit l'étape (g) pour diriger la seconde quantité de matière plastique injectée dans des régions prédéterminées de la cavité de moule pendant l'étape (d).

11. Procédé selon la revendication 1, dans lequel l'étape (a) comprend l'étape suivante :
(i) former la cavité de moule avec des parties de moule qui définissent une région de coulée quand l'élément de contact est sorti dans la position avant, dans lequel la région de coulée a une dimension et/ou une température telles qu'une certaine partie de la première quantité de matière plastique se trouvant dans la région de coulée pendant l'étape (e) ne se solidifie pas pendant la période déterminée, et se trouve encore forcée à l'intérieur de la cavité de moule par la seconde quantité de matière plastique injectée pendant l'étape (d).

12. Procédé selon la revendication 1, dans lequel l'étape (c) comprend l'étape suivante :
(i) injecter la première quantité de matière plastique par une ouverture donnée ; et dans lequel l'étape (d) comprend l'étape suivante :
(j) injecter la seconde quantité de matière plastique par l'ouverture donnée.

13. Procédé selon la revendication 12, dans lequel l'étape (c) comprend l'étape suivante :
(i) injecter la première quantité de matière plastique par une ouverture donnée seulement ; et
dans lequel l'étape (d) comprend l'étape suivante
(j) injecter la seconde quantité de matière plastique par la première ouverture donnée.

14. Procédé selon la revendication 1, comprenant encore l'étape suivante :
(i) sortir l'élément de contact pour maintenir l'injection de matière plastique sous pression.

15. Procédé selon la revendication 1, dans lequel l'étape (c) comprend l'étape suivante :
(i) injecter la première quantité de matière plastique à l'intérieur de la cavité de moule pendant que l'élément de contact est dans la position avant afin que la première matière plastique injectée couvre complètement la ligne de séparation.

16. Procédé selon la revendication 1, dans lequel l'étape (c) comprend l'étape suivante :
(i) injecter la première quantité de matière plastique à l'intérieur de la cavité de moule pendant que l'élément de contact est dans la position avant, afin que la première quantité de matière plastique injectée ne couvre pas complètement la ligne de séparation, pour former au moins une partie de paroi du produit avec la première matière plastique.

17. Système pour contrôler l'épaisseur de paroi d'un produit en matière plastique pendant le moulage par injection du produit dans une cavité de moule d'un moule comprenant une partie de noyau et une partie de cavité, séparées par une ligne de séparation, et définissant la cavité de moule entre elles,
le système comprenant :
(a) la cavité de moule ayant un axe longitudinal formé par la combinaison de la partie de noyau avec la partie de cavité, dans lequel une partie au moins comprend un élément de contact pouvant être sorti et rentré dans la direction longitudinale, entre une position avant sortie et une position arrière rentrée, l'extrémité de l'élément de contact qui fait face à la cavité de moule comprenant une surface de contact dont une partie au moins n'est pas perpendiculaire à l'axe longitudinal de la partie de cavité ;
(b) un dispositif pour sortir l'élément de contact jusqu'à la position avant afin que la surface de contact de l'élément de contact vienne en contact avec une surface de contact associée de l'autre partie de moule ; une partie au moins de ladite surface de contact associée n'étant pas perpendiculaire à l'axe longitudinal de la partie de cavité, dans lequel la surface de contact non perpendiculaire de l'élément de contact vient en contact avec, et se trouve verrouillée par la surface de contact non perpendiculaire associée de l'autre partie de moule pour empêcher un mouvement latéral de la partie de noyau par rapport à la partie de cavité pendant que l'élément de contact est sorti ;
(c) un dispositif pour injecter une première quantité de matière plastique et faire couler ladite première quantité de matière plastique vers l'intérieur de la cavité de moule pendant que l'élément de contact est dans la position avant pour former avec la première matière plastique au moins une partie de paroi du produit ayant une épaisseur contrôlée du fait qu'un mouvement latéral de la partie de noyau par rapport à la partie de cavité est empêchée par le fait que lesdites surfaces de contact non perpendiculaires sont verrouillées ;
(d) un dispositif pour injecter une seconde quantité de matière plastique à l'intérieur de la cavité, de moule pendant que l'élément de contact est dans la position arrière ;
caractérisé encore par :
(e) un dispositif pour arrêter la coulée de matière plastique ; et
(f) un dispositif pour rentrer l'élément de contact dans la position arrière, dans laquelle la surface de contact de l'élément de contact cesse d'être en contact avec la surface de contact associée de l'autre partie de moule ;
grâce à quoi la partie de paroi formée par la première matière plastique peut être refroidie pendant que la coulée de la matière plastique est interrompue, afin que la première quantité de matière plastique injectée puisse au moins être partiellement solidifiée pour maintenir ladite épaisseur contrôlée et empêcher un mouvement latéral de la partie de noyau par rapport à la partie de cavité, mouvement qui pourrait résulter de l'injection de la seconde quantité de matière plastique.

18. Système selon la revendication 17, dans lequel le dispositif pour injecter la seconde quantité de matière plastique comprend un dispositif pour injecter la seconde quantité de matière plastique sous une pression inférieure à celle de la première quantité de matière plastique afin de réduire encore la force de serrage nécessaire.

19. Système selon la revendication 17, comprenant
un élément coulissant en forme de coin ;
un dispositif pour sortir l'élément en forme de coin entre l'élément de contact et un élément de base fixe afin de sortir en force l'élément de contact dans la position avant ; et
un dispositif pour rentrer l'élément en forme de coin de manière que l'élément de contact puisse être rentré.

20. Système selon la revendication 19, dans lequel l'élément en forme de coin est couplé en étant retenu et coulissant par rapport a la fois à l'élément de contact et à l'élément de base fixe afin que le retrait de l'élément en forme de coin fasse rentrer l'élément de contact.
